# EUROPEAN PATENT APPLICATION

(11) **EP 3 933 381 A1**
(43) Date of publication of application: **05.01.2022**
(21) Application number: 20762611.0
(22) Date of filing: 25.02.2020
(51) Int. Cl.: G01N 19/00, G01N 21/17, G01N 11/14

(54) **FLUID SAMPLE INTERNAL STRUCTURE OBSERVATION DEVICE AND INTERNAL STRUCTURE ANALYSIS SYSTEM, FLUID SAMPLE INTERNAL STRUCTURE OBSERVATION METHOD AND INTERNAL STRUCTURE ANALYSIS METHOD, AND METHOD FOR MANUFACTURING CERAMIC**

(30) Priority: 28.02.2019 JP 2019036998
(71) Applicant: KANAGAWA INSTITUTE OF INDUSTRIAL SCIENCE AND TECHNOLOGY, Ebina-shi Kanagawa 243-0435 (JP); NATIONAL UNIVERSITY CORPORATION YOKOHAMA NATIONAL UNIVERSITY, Yokohama-shi Kanagawa 240-8501 (JP)
(72) Inventor: TAKAHASHI Takuma, Ebina-shi, Kanagawa 243-0435 (JP); TATAMI Junichi, Yokohama-shi, Kanagawa 240-8501 (JP); TAKABA Hiroki, Yokohama-shi, Kanagawa 240-8501 (JP)
(74) Representative: SSM Sandmair
(86) International application number: PCT/JP2020/007504
(87) International publication number: WO 2020/175481

(57) **Abstract**

The purpose of the present invention is to achieve an in-situ observation of structural change in a shear field of slurry, i.e. an evaluation of a rheology property of slurry containing raw materials of a ceramic as a fluid sample, together with an in-situ observation of internal structure of the fluid sample in an evaluation process, and a clarification of internal structural change. An observation of an internal structure of a fluid sample 1 in an evaluation process of a rheology property by a rheometer 10 is achieved by generating an optical coherence tomographic image by performing an optical coherence tomography by irradiating a light in infrared region from outside of the rheometer 10 to the fluid sample 1, by inclining an optical axis of light in infrared region irradiating the fluid sample 1 for a predetermined angle within an angular range of 1 to 10 degrees with respect to a normal direction of an observation surface 1A of the fluid sample 1 by the optical coherence tomography imaging device 20, together with an evaluation of a rheology property of the fluid sample 1 containing components different in a refractive index by the rheometer 10.

## Description

### BACKGROUND OF THE INVENTION

### Field of the Invention

The present invention relates to an internal structure observation device and an internal structure analysis system of a fluid sample containing components different in a refractive index, an internal structure observation method and an internal structure analysis method of a fluid sample, and a method for manufacturing a ceramic. The present application claims priority based on Japanese Patent Application No. 2019-036998 filed in Japan on February 28, 2019, which is incorporated by reference herein.

### Description of Related Art

Conventionally, a method of using an optical microscope (for example, refer to Non-Patent Literature 1), a method of using an X-ray CT (for example, refer to Non-Patent Literature 2, Non-Patent Literature 3), or the like have been used for an observation of an internal structure of a ceramic.

It is known that a property of a ceramic is controlled by an internal structure of a ceramic. Therefore, it is possible to manufacture a ceramic having high reliability and excellent function, by properly comprehending a forming process of a structure in a ceramic process chain from raw materials to a final product of a ceramic, and by controlling the structure. In addition, if a structure of a slurry, a molded body, a sintered body, or the like changing constantly during a manufacturing process can be evaluated in real time by utilizing a method for observing such structure forming process, it will be possible to detect a cause for forming an uneven structure in a relatively preceding stage of the process, and to eliminate the cause, without depending on a skill of artisan or a visual observation.

Further, if it is possible to perform a total inspection of an internal structure of a final product cheaply in high speed, high resolution, and in wide range, it is possible to reduce a cost required for the inspection and to improve a reliability of the product.

As such, to observe a structure forming process in a manufacturing process of a ceramic dynamically and three-dimensionally to comprehend it scientifically is significantly important for improving reliability and for improving a yield of a ceramic.

On the other hand, numerous control factors exist for each unit operation in a manufacturing process of a ceramic. For example, in a dispersion of ceramic fine particles, an addition amount and a type of dispersing agent correspond to the control factors. A dispersion of ceramic fine particles to a dispersion medium is a complex phenomenon involving an adsorption of the dispersing agent to the ceramic fine particles, a wettability of the dispersion medium with respect to the ceramic fine particles, and else. Therefore, an optimization of an appearance by experience and intuition has been performed about the control factors for preparing a slurry.

In addition, a phenomenon relating to an interface of a liquid phase and particles, such as an affinity with a solvent and an adsorption behavior of the dispersing agent, should differ for each ceramic fine particle. Therefore, when considering a molding process in the latter part, it is necessary to optimize control factors by considering a viscosity of slurry, a solid content in slurry, an organic substance (a binder, a plasticizer, a lubricant, or the like) contained in slurry, and else.

In addition, when drying a sheet-like molded body, it should change dynamically from a structure that the ceramic fine particles are dispersed in a solution to a structure that solid bodies themselves contact to each other. This change is similar to a flocculation. If it is possible to scientifically solve control factors of structure formation by comprehending a change of internal structure of the molded body properly, simultaneously with drying of the molded body, it is considered that it will be possible to analytically determine a drying temperature, time, and atmosphere for obtaining homogenous molded body without a crack or a deformation. Further, also in a sintering process of the molded body which consumes a lot of energy, a temperature rise profile mostly depends on a setting by the skill of an artisan. If control factors in the sintering process are solved scientifically to be optimized properly, it is possible to reduce energy consumption, and also, it is possible to reduce cost.

As such, if a structure forming process in a manufacturing process of a ceramic is comprehended, and its control factors are solved scientifically, it will be possible to systemize a manufacturing process technology of a ceramic. And, through optimization of an entire ceramic process chain, it will be possible to solve various technical problems which are being obstacles for a popularization of a ceramic. As a result, it is possible to achieve high reliability, low cost, and improvement of yield in a manufacturing of a ceramic.

In addition, there was a device for observation by microscope while measuring a viscosity of a liquid in a shear field (rheo-microscope), but it was not possible to internally observe non-transparent fine particle suspension due to scattering of light.

Further, an optical coherence tomography is one of a method for internally observing a substance in high speed and high resolution, but it is only used for internal structure observation of static fine particle suspension in which a shear field is not applied (for example, refer to Patent Literature 2).

Patent Literature 1: JPU H05(1993)-036356
Patent Literature 2: JP 2002-310899 A

Non-Patent Literature 1: Minoru Takahashi, Masayo Oya, Masayoshi Fuji, "New Technique of Observation for Fine Particles Dispersion in Slurry Using In-situ Solidification", J.Soc.Powder Technol., Japan, 40, 410-417 Vol.40 No.6 (2003), p410-417

Non-Patent Literature 2: T. Hondo, Z. Kato, S. Tanaka, "Enhancing the contrast of Low-density packing regions in images of ceramic powder compacts using a contrast agent for micro-X-ray computer tomography", Journal of the Ceramic Society of Japan, year 2014, 122[7], p574-576

Non-Patent Literature 3: D. Bernard et al, "First direct 3D visualization of microstructural evolutions during sintering through X-ray computed microtomography" Acta Materialia, 53 (2005) 121-128

### SUMMARY OF THE INVENTION

As mentioned in the above, a property of a ceramic significantly depends on an internal structure thereof, but its structure changes per a manufacturing process such as a mixing, a molding, a dewaxing, a firing, and else. Especially, in a dewaxing process and a firing process to be heated at high temperature, a significant change of a substance occurs, such as a melting, an evaporation, a pyrolysis, an oxidation, a sintering contraction, or the like of an added organic substance, and a volume change also occurs, so a deformation or a crack of the molded body may occur.

In an internal structure of a ceramic, an inhomogeneity may be generated, for example by an inhomogeneity of porosity, a density, a coarse particle, a pore, a crack, impurities, a second phase, and else. When these matters exist in a ceramic, it may be a starting point of breakdown, so it will be a cause of strength degradation, and it is known that a mechanical reliability of a ceramic will be deteriorated significantly. Such inhomogeneity of an internal structure of a ceramic is comprising an optical inhomogeneity.

Therefore, it is important for manufacturing an excellent ceramic to comprehend and control a structural change of the molded body in accordance with a dewaxing and a firing, that is, a state of optical inhomogeneity.

In addition, in a slurry used when manufacturing a ceramic, fine particles exist by dispersing or flocculating. A state of fine particles is having a significant effect on a structure and a property of a ceramic, so it is important to observe an aggregation state of particles in the slurry. Generally, it is reported that a reduction of viscosity corresponds to a dispersion of fine particles existing in the slurry, so a measurement of viscosity is often performed to evaluate a dispersity. However, even a shear field is applied when measuring a viscosity of the slurry, an aggregation state of particles in the slurry when applying a shear field is not observed, and it cannot be said that correlation between a dispersity and a viscosity is not clarified sufficiently.

In Japanese Patent Application No. 2018-157784, the present inventors are proposing an internal structure observation device and an internal structure analysis system of a ceramic, in which an in-situ observation of a ceramic in a dewaxing process or a firing process and a clarification of an internal structural change is achieved, an internal structure observation method and an internal structure analysis method of a ceramic, and a manufacturing method of a ceramic.

In the invention relating to this Japanese Patent Application No. 2018-157784, a high speed and high-resolution 3D observation of internal structural change at high temperature, which could not be observed conventionally, a simultaneous measurement of a change in density and internal structure, and an in-situ simultaneous measurement of a change in weight and a change in internal structure at high temperature, are achieved.

Considering the above conventional circumstances, the purpose of the present invention is to provide an internal structure observation device and an internal structure analysis system of a fluid sample achieving an in-situ observation of an internal structure of the fluid sample in an evaluation process of a rheology property of the fluid sample by a rheometer and a clarification of internal structural change, by an internal observation method for observing an internal structure of non-transparent substance by using optical coherence (OCT (Optical Coherence Tomography)), an internal structure observation method and an internal structure analysis method of a fluid sample, and a manufacturing method of a ceramic.

The purpose of the present invention is to achieve an in-situ observation of a structural change in a shear field of a slurry, that is, an evaluation of a rheology property of a slurry containing raw materials of a ceramic as the fluid sample, together with an in-situ simultaneous observation of an internal structure of the fluid sample in the evaluation process, and a clarification of an internal structural change.

Other purposes of the present invention and concrete advantages obtained by the present invention will be clarified more from explanations of embodiments explained in below.

In this invention, an optical coherence tomography imaging device is attached to a rheometer, and by devising an observation method, a device and a system capable of observing an internal structure of a fluid sample containing components different in a refractive index such as non-transparent fine particle suspension, while measuring a viscosity in a shear field, and a manufacturing method of a ceramic material using this device or system.

That is, the present invention is an internal structure observation device of a fluid sample, comprising: a rheometer for evaluating a rheology property of the fluid sample containing components different in a refractive index; and an optical coherence tomography imaging unit for generating an optical coherence tomographic image by performing an optical coherence tomography by irradiating a light in infrared region from outside of the rheometer to the fluid sample during an evaluation of the rheology property by the rheometer, wherein an observation of an internal structure of the fluid sample in an evaluation process of the rheology property by the rheometer is achieved as the optical coherence tomographic image generated by the optical coherence tomography imaging unit, by inclining an optical axis of light in infrared region irradiating the fluid sample for a predetermined angle within an angular range of 1 to 10 degrees with respect to a normal direction of an observation surface of the fluid sample in the rheometer by the optical coherence tomography imaging unit.

In the internal structure observation device of the fluid sample relating to the present invention, the rheometer is a conical flat-plate type rheometer, and an axial direction of a rotation axis of the rheometer may be the normal direction of the observation surface of the fluid sample.

In addition, in the internal structure observation device of the fluid sample relating to the present invention, the rheometer is a coaxial double cylindrical type rheometer, and a direction being orthogonal to an axial direction of a rotation axis of the rheometer may be the normal direction of the observation surface of the fluid sample.

Further, in the internal structure observation device of the fluid sample relating to the present invention, the fluid sample may be a slurry containing fine particles of a ceramic.

The present invention is an internal structure analysis system of a fluid sample, comprising: a rheometer for evaluating a rheology property of the fluid sample containing components different in a refractive index; an optical coherence tomography imaging unit for generating an optical coherence tomographic image by performing an optical coherence tomography by irradiating a light in infrared region from outside of the rheometer to the fluid sample during an evaluation of the rheology property by the rheometer; and an image processing device for performing an image processing to clarify the optical coherence tomographic image generated by the optical coherence tomography imaging unit, wherein an analysis of an internal structure of the fluid sample in an evaluation process of the rheology property by the rheometer is achieved by obtaining the optical coherence tomographic image generated by the optical coherence tomography imaging unit, by inclining an optical axis of light in infrared region irradiating the fluid sample for a predetermined angle within an angular range of 1 to 10 degrees with respect to a normal direction of an observation surface of the fluid sample in the rheometer by the optical coherence tomography imaging unit, and by performing the image processing to clarify the optical coherence tomographic image by the image processing device.

In the internal structure analysis system of the fluid sample relating to the present invention, the rheometer is a conical flat-plate type rheometer, and an axial direction of a rotation axis of the rheometer may be the normal direction of the observation surface of the fluid sample.

In addition, in the internal structure analysis system of the fluid sample relating to the present invention, the rheometer is a coaxial double cylindrical type rheometer, and a direction being orthogonal to an axial direction of a rotation axis of the rheometer may be the normal direction of the observation surface of the fluid sample.

Further, in the internal structure analysis system of the fluid sample relating to the present invention, the fluid sample may be a slurry containing fine particles of a ceramic.

The present invention is an internal structure observation method of a fluid sample, comprising: an evaluation step for evaluating a rheology property of the fluid sample containing components different in a refractive index by a rheometer; and an optical coherence tomography imaging step for generating an optical coherence tomographic image by performing an optical coherence tomography by irradiating a light in infrared region from outside of the rheometer to the fluid sample during the evaluation step, wherein in the optical coherence tomography imaging step, an observation of an internal structure of the fluid sample in an evaluation process of the rheology property by the rheometer is achieved as the optical coherence tomographic image generated by an optical coherence tomography imaging unit, by inclining an optical axis of light in infrared region irradiating the fluid sample for a predetermined angle within an angular range of 1 to 10 degrees with respect to a normal direction of an observation surface of the fluid sample in the rheometer by the optical coherence tomography imaging unit.

In addition, the present invention is an internal structure analysis method of a fluid sample, comprising: an evaluation step for evaluating a rheology property of the fluid sample containing components different in a refractive index by a rheometer; an optical coherence tomography imaging step for generating an optical coherence tomographic image by performing an optical coherence tomography by irradiating a light in infrared region from outside of the rheometer to the fluid sample during the evaluation step; and an image processing step for performing an image processing to clarify the optical coherence tomographic image generated by an optical coherence tomography imaging device by an image processing device, wherein in the optical coherence tomography imaging step, an analysis of an internal structure of the fluid sample in an evaluation process of the rheology property by the rheometer is achieved by obtaining the optical coherence tomographic image by inclining an optical axis of light in infrared region irradiating the fluid sample for a predetermined angle within an angular range of 1 to 10 degrees with respect to a normal direction of an observation surface of the fluid sample by the optical coherence tomography imaging device, and by performing the image processing to clarify the optical coherence tomographic image by the image processing device.

Further, the present invention is a manufacturing method of a ceramic, comprising: a slurry preparation step for obtaining raw materials of the ceramic optimized by analyzing a structure of a slurry containing fine particles of the ceramic as a fluid sample together with a rheology property by the internal structure analysis system of the fluid sample; a molding step for molding the raw materials of the ceramic obtained by the slurry preparation step to a molded body; a heat treatment step for performing a heat treatment to the molded body obtained by the molding step by a heat treatment furnace; an optical coherence tomography imaging step for generating an optical coherence tomographic image by performing an optical coherence tomography by irradiating a light in infrared region from outside of the heat treatment furnace to the molded body during a heat treatment in the heat treatment step; and an image analysis and processing step for performing an image analysis and processing with respect to the optical coherence tomographic image generated in the optical coherence tomography imaging step, wherein the image analysis and processing is performed to determine whether an optically inhomogeneous state is generated to an internal structure of the molded body in a heat treatment process of the ceramic.

In the present invention, it is possible to achieve an in-situ observation of internal structure of the fluid sample, together with an evaluation of a rheology property of the fluid sample containing components different in a refractive index by a rheometer, and a clarification of internal structural change in real time, by using an optical coherence tomography imaging device for generating an optical coherence tomographic image by an internal observation method for observing an internal structure of non-transparent substance by using optical coherence (OCT (Optical Coherence Tomography)).

Therefore, according to the present invention, it is possible to provide an internal structure observation device and an internal structure analysis system of a fluid sample achieving an in-situ observation of internal structure of the fluid sample in an evaluation process of a rheology property of the fluid sample containing components different in a refractive index by a rheometer and a clarification of internal structural change, by an internal observation method for observing an internal structure of non-transparent substance by using optical coherence (OCT (Optical Coherence Tomography)), an internal structure observation method and an internal structure analysis method of a fluid sample, and a manufacturing method of a ceramic.

It is possible to obtain raw materials of a ceramic optimized by an evaluation of a rheology property of a slurry containing raw materials of the ceramic as the fluid sample, an in-situ simultaneous observation of an internal structure of the fluid sample in an evaluation process, and a clarification of internal structural change. Further, about a molded body of the raw materials of the optimized ceramic, it is possible to optimize a manufacturing of the ceramic based on experimental facts, and not based on experience and intuition, for example, if it is fired while performing an in-situ observation of a sintering process, it is possible to stop firing before generation of inhomogeneous structure and after densification of the ceramic.

### BRIEF DESCRIPTION OF THE DRAWINGS

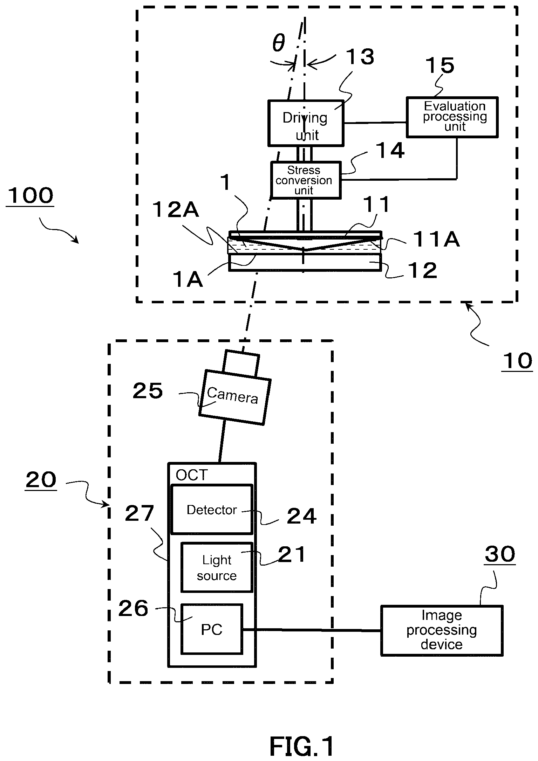

FIG. 1 is a block diagram illustrating a configuration of an internal structure analysis system of a slurry applying the present invention.

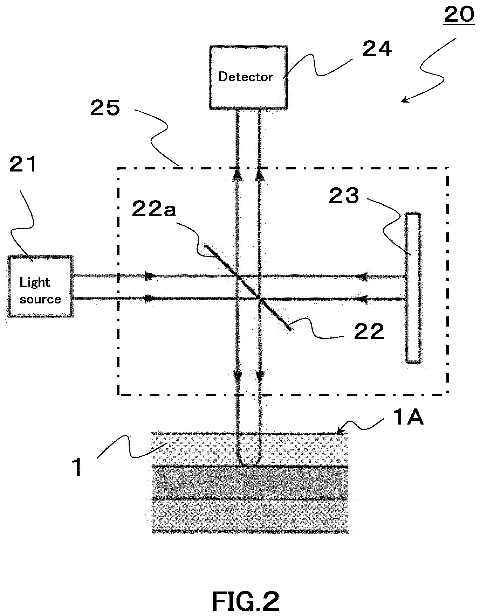

FIG. 2 is a schematic view illustrating a configuration of an optical coherence tomography imaging device in the internal structure analysis system.

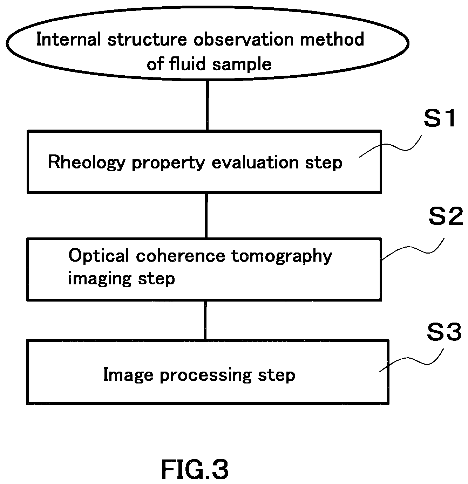

FIG. 3 is a flow chart illustrating a procedure of an internal structure observation method of a slurry performed in the internal structure analysis system.

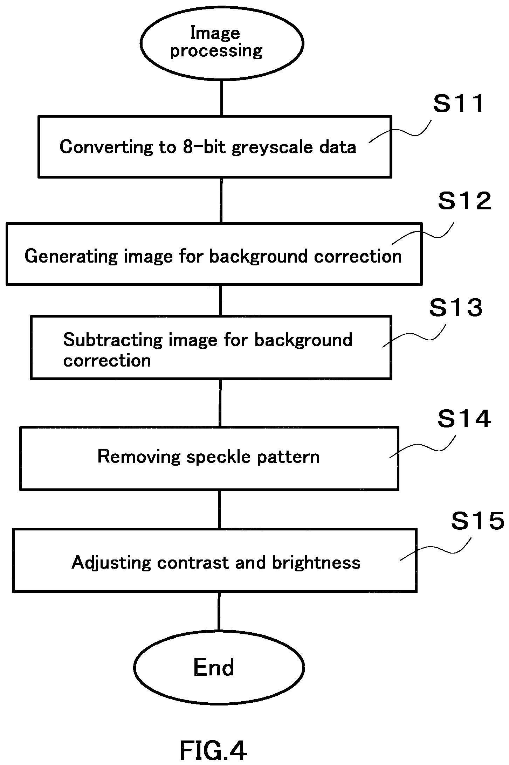

FIG. 4 is a flow chart illustrating a processing procedure by an image processing device in the internal structure analysis system.

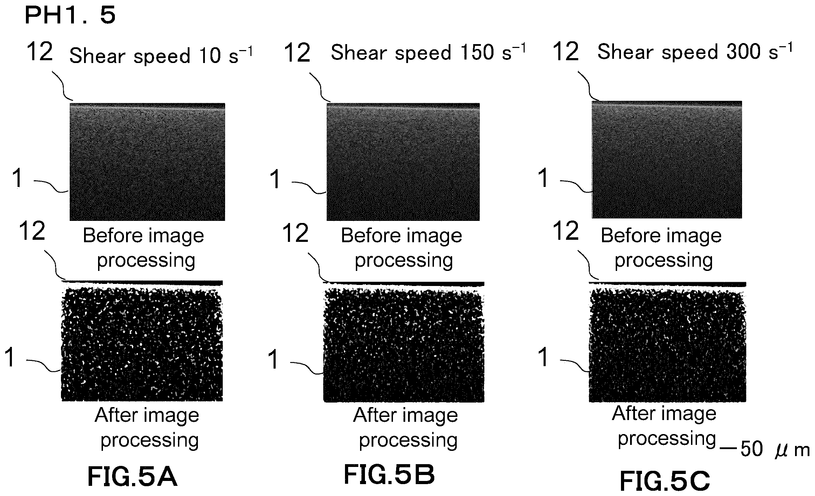

FIG. 5A, FIG. 5B, and FIG. 5C illustrate a clarified image and an image before clarification by the image processing device about respective optical coherence tomographic images obtained by image-capturing the fluid sample with pH of 1.5, wherein FIG. 5A illustrates respective optical coherence tomographic images before and after the image processing obtained when a shear speed is 10_{S}⁻¹, FIG. 5B illustrates respective optical coherence tomographic images before and after the image processing obtained when a shear speed is 150_{S}⁻¹, and FIG. 5C illustrates respective optical coherence tomographic images before and after the image processing obtained when a shear speed is 300_{S}⁻¹.

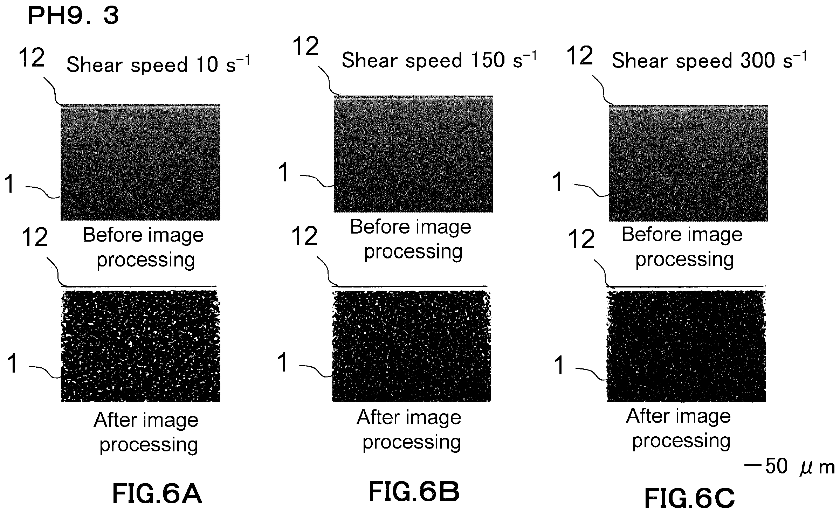

FIG. 6A, FIG. 6B, and FIG. 6C illustrate a clarified image and an image before clarification by the image processing device about respective optical coherence tomographic images obtained by image-capturing the fluid sample with pH of 9.3, wherein FIG. 6A illustrates respective optical coherence tomographic images before and after the image processing obtained when a shear speed is 10_{S}⁻¹, FIG. 6B illustrates respective optical coherence tomographic images before and after the image processing obtained when a shear speed is 150_{S}⁻¹, and FIG. 6C illustrates respective optical coherence tomographic images before and after the image processing obtained when a shear speed is 300_{S}⁻¹.

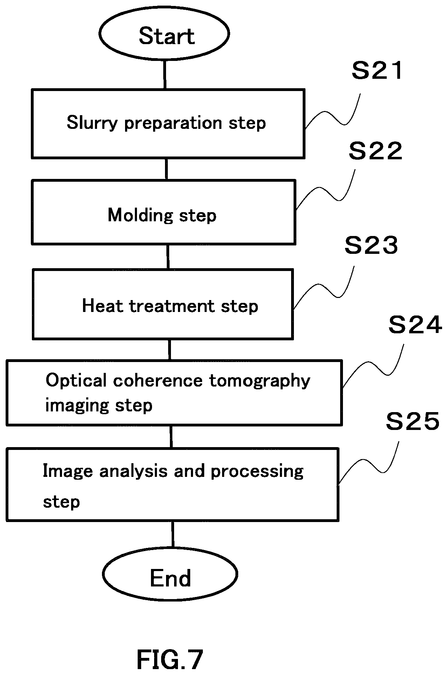

FIG. 7 is a flow chart of a manufacturing method of a ceramic performed by using the internal structure analysis system.

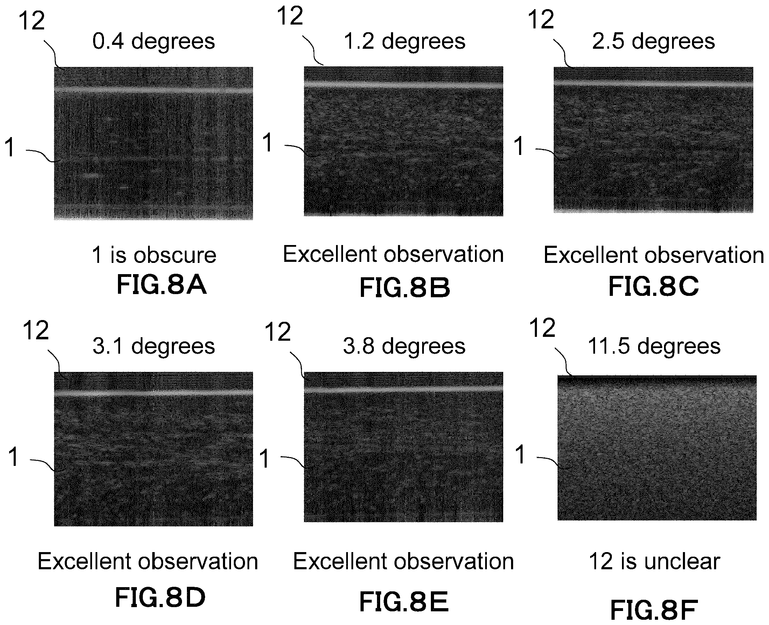

FIG. 8A, FIG. 8B, FIG. 8C, FIG. 8D, FIG. 8D, FIG. 8E, and FIG. 8F illustrate optical coherence tomographic images in various angles obtained by the optical coherence tomography imaging device, by inclining an optical axis of light in infrared region irradiating the fluid sample for a predetermined angle θ within an angular range of 1 to 10 degrees with respect to a normal direction of an observation surface 1A of the fluid sample 1, wherein FIG. 8A is an optical coherence tomographic image obtained when θ = 0.4 degrees, FIG. 8B is an optical coherence tomographic image obtained when θ = 1.2 degrees, FIG. 8C is an optical coherence tomographic image obtained when θ = 2.5 degrees, FIG. 8D is an optical coherence tomographic image obtained when θ = 3.1 degrees, FIG. 8E is an optical coherence tomographic image obtained when θ = 3.8 degrees, and FIG. 8F is an optical coherence tomographic image obtained when θ = 11.5 degrees.

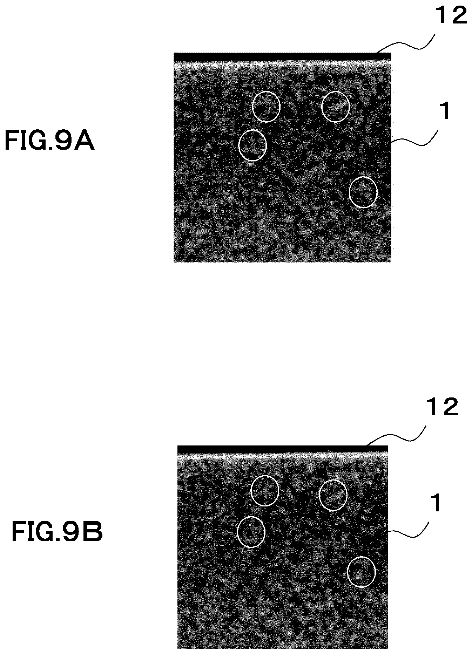

FIG. 9A and FIG. 9B illustrate optical coherence tomographic images, in which a shear speed of a rheometer is being 0, obtained by an in-situ observation of an internal structure of a slurry containing raw materials of a ceramic in an evaluation process of a rheology property by the rheometer by the optical coherence tomography imaging device in the internal structure analysis system, wherein FIG. 9A is an optical coherence tomographic image which is image-captured when the shear speed is 0, and FIG. 9B is an optical coherence tomographic image which is image-captured after 0.033 seconds from FIG. 9A.

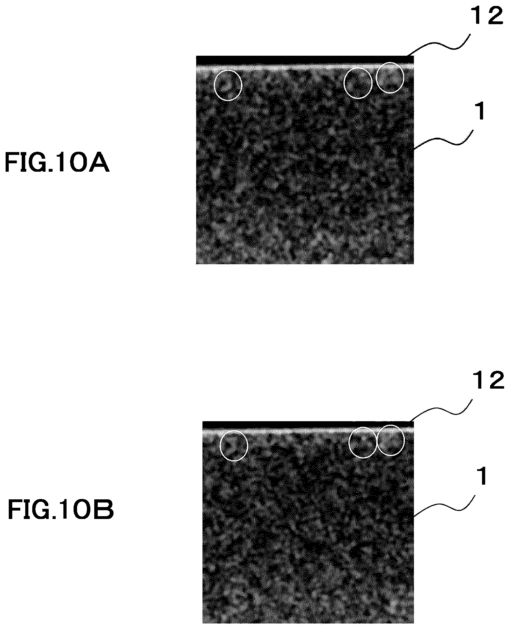

FIG. 10A and FIG. 10B illustrate respective optical coherence tomographic images obtained by an in-situ observation of an internal structure of a slurry with a shear speed of the rheometer being 16_{S}⁻¹ in the internal structure analysis system, wherein FIG. 10A is an optical coherence tomographic image which is image-captured when the shear speed is 16_{S}⁻¹, and FIG. 10B is an optical coherence tomographic image which is image-captured after 0.033 seconds from FIG. 10A.

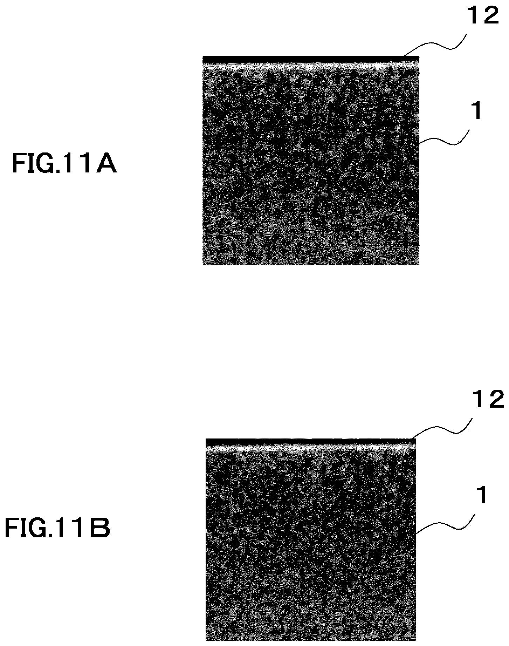

FIG. 11A and FIG. 11B illustrate respective optical coherence tomographic images obtained by an in-situ observation of an internal structure of a slurry with a shear speed of the rheometer being 150_{S}⁻¹ in the internal structure analysis system, wherein FIG. 11A is an optical coherence tomographic image which is image-captured when the shear speed is 150_{S}⁻¹, and FIG. 11B is an optical coherence tomographic image which is image-captured after 0.033 seconds from FIG. 11A.

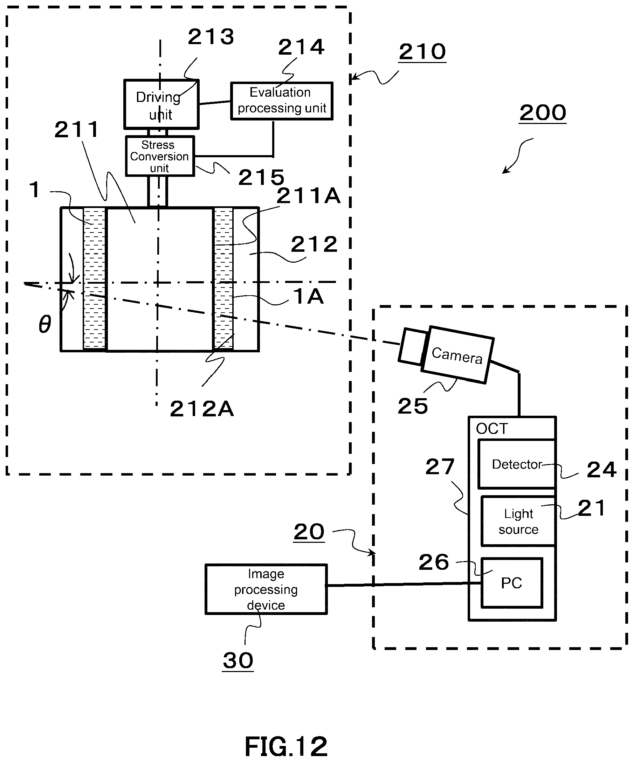

FIG. 12 is a block diagram illustrating an example of another internal structure analysis system of a slurry applying the present invention.

### DETAILED DESCRIPTION OF THE INVENTION

Hereinafter, explaining in detail about preferred embodiments of the present invention, with reference to the drawings. In addition, about common components, it is explained by giving common reference number in the drawings. Also, the present invention should not be limited to the following examples, it goes without saying that it can be changed optionally within a scope not deviating from a gist of the present invention.

The present invention is applied to an internal structure analysis system 100 of a slurry, for example in a configuration as illustrated in a block diagram of FIG. 1.

This internal structure analysis system 100 of a slurry comprises a rheometer 10, an optical coherence tomography imaging device 20, and an image processing device 30.

The rheometer 10 in this internal structure analysis system 100 is a rotational rheometer for evaluating a rheology property of a fluid sample 1 by an evaluation processing unit 15, by detecting, by a stress conversion unit 14, a stress or a strain rate (a shear rate) generated as a result of a rotational shear stress working on the fluid sample 1, by rotating a conical board 11 by a driving unit 13, with respect to the fluid sample 1 loaded between a conical surface 11A of the conical board 11 and a flat surface 12A of a flat-plate disc 12.

The conical board 11, which is an upper plate in this rheometer 10, is made of, for example a stainless steel, and the flat-plate disc 12, which is a lower plate, is made of, for example a transparent glass plate.

In addition, the flat-plate disc 12, which is a lower plate, is made of a material transparent to a light in infrared region emitted from the optical coherence tomography imaging device 20. The upper plate may be made of, for example an iron, an aluminum, a ceramic, and a glass, and the lower plate is made of, for example a sapphire, a transparent ceramic, and a plastic, and various materials may be applied according to an object of analysis.

In this internal structure analysis system 100, a slurry containing fine particles (raw materials) of a ceramic is loaded between the conical surface 11A of the conical board 11 and the flat surface 12A of the flat-plate disc 12, as the fluid sample 1, to evaluate a rheology property of the slurry.

In addition, as illustrated in a schematic view of FIG. 2, the optical coherence tomography imaging device 20 in this internal structure analysis system 100 comprises, for example a light source 21, a half mirror 22, a reference mirror 23, and a detector 24, and composed of a camera head unit 25 including an optical coherence system consists of the half mirror 22 and the reference mirror 23, and an optical coherence tomography imaging unit 27 including the light source 21, the detector 24, and an information processing unit 26.

The light source 21 is for irradiating a light in infrared region to a slurry containing fine particles (raw materials) of a ceramic loaded to the rheometer 10 as the fluid sample 1.

In addition, the light source 21 emit a light reflected by fine particles (raw materials) of a ceramic contained in a slurry which is the fluid sample 1 in the present embodiment, which is a light with a center wavelength from 700 nm to 2000 nm. Alight reflected by fired materials (raw materials) is, for example a light which is not absorbed by the fired materials (raw materials).

The half mirror 22 is arranged on an optical path of a light emitted from the light source 21. In addition, the half mirror 22 is arranged such that a surface 22a at light source 21 side is inclined in an angle of 45 degrees to the light source 21 side with respect to the optical path.

The half mirror 22 separates a light emitted from the light source 21 to an irradiation light irradiated on the fluid sample 1 and a reference light incident on the reference mirror 23. And, the half mirror 22 reflects separated irradiation light to incident on the fluid sample 1. In addition, the half mirror 22 transmits separated reference light to incident on the reference mirror 23.

The reference mirror 23 is arranged on an optical path of a light emitted from the light source 21.

The reference mirror 23 reflects the reference light transmitted the half mirror 22, and returns its reflected light to the half mirror 22. Therefore, the reference mirror 23 is arranged opposing to the half mirror 22.

In addition, the reference mirror 23 is movable along an optical path of a light emitted from the light source 21. That is, the refence mirror 23 is being able to adjust a distance to the half mirror 22. In stead of making the reference mirror 23 to be movable, a similar function may be achieved by using a wavelength variable light source.

The detector 24 is arranged on an optical path of the reference light and an optical path of a returning light obtained by irradiating the irradiation light to a slurry which is the fluid sample 1. The reference light returns to the half mirror 22 by reflected by the reference mirror 23, and further, it is reflected by the half mirror 22.

The half mirror 22 and the reference mirror 23 of the optical coherence tomography imaging device 20 compose an interference optical system.

Here, the optical coherence tomography imaging device 20 is having an unillustrated posture adjusting mechanism for holding the camera head unit 25 movable and adjustable in three-dimensional (X, Y, Z) directions, or in which a rotation angle position is being adjustable around X axis and around Y axis, and a posture of the camera head unit 25 held by the unillustrated posture adjusting mechanism is such that an optical axis of light in infrared region irradiating the fluid sample 1 is being able to incline with respect to a normal direction of an observation surface 1A of the fluid sample 1.

And, in this internal structure analysis system 100, an optical coherence tomographic image is generated by the optical coherence tomography imaging device 20, in a state that an optical axis of light in infrared region irradiating the fluid sample 1 is inclined for a predetermined angle θ within an angle range of 1 to 10 degrees with respect to a normal direction of the observation surface 1A of the fluid sample 1, from the camera head unit 25 of the optical coherence tomography imaging device 20.

That is, in this fluid sample of the internal structure analysis system 100, the rheometer 10 is a conical flat-plate type rheometer, and an optical coherence tomographic image is generated by the optical coherence tomography imaging device 20, in a state that an optical axis of light in infrared region irradiating the fluid sample 1 via a flat-plate disc 12 composed of a transparent glass, which is a lower plate, i.e. an axial direction of a rotation axis of the rheometer 10, is inclined for a predetermined angle θ within an angle range of 1 to 10 degrees from a normal direction of the observation surface 1A of the fluid sample 1, i.e. a state being orthogonal to the flat surface 12A of the flat-plate disc 12, by the optical coherence tomography imaging device 20.

Here, in the optical coherence tomography imaging device 20 illustrated in a schematic view of FIG. 2, a light in infrared region emitted from the light source 21 is a light with a center wavelength from 700 nm to 2000 nm, and also, a light reflected by fine particles (raw materials) of a ceramic or the like contained in the fluid sample 1.

The half mirror 22 separates a light emitted from the light source into an irradiation light irradiated on the fluid sample 1 and a reference light incident on the reference mirror 23. The half mirror 22 reflects separated irradiation light to incident on the fluid sample 1. In addition, the half mirror 22 transmits separated reference light to incident on the reference mirror 23.

That is, the irradiation light separated by the half mirror 22 is irradiated on the fluid sample 1 via the flat-plate disc 12 composed of a transparent glass, which is a lower plate of the rheometer 10, from a direction that the optical axis, i.e. an axial direction of a rotation axis of the rheometer 10, is inclined for a predetermined angle θ within an angle range of 1 to 10 degrees from a normal direction of the observation surface 1A of the fluid sample 1 in the rheometer 10, i.e. a state being orthogonal to the flat surface 12A of the flat-plate disc 12.

The irradiation light incident on the fluid sample 1 is reflected by an interface having a difference in a refractive index, by components with different refractive index such as fine particles (raw materials) of a ceramic contained in a slurry which is the fluid sample 1, and incident on the half mirror 22 of the optical coherence tomography imaging device 20 via the flat-plate disc 12 from the observation surface 1A, i.e. a surface of the fluid sample 1 as a returning light.

The returning light obtained by irradiating the irradiation light on the fluid sample 1, and the reference light returned by reflected by the reference mirror 23, are superposed again on the half mirror 22. At this time, if distances in which the returning light from the fluid sample 1 and the reference light from the reference mirror 24 have passed through are equal, two lights are intensified. On the other hand, if there is a gap between distances in which the returning light from the fluid sample 1 and the reference light from the reference mirror 23 have passed through, and when optical phases become opposite, two lights are offset.

Here, the reference mirror 23 composing an optical coherence system is moved to adjust a distance between the reference mirror 23 and the half mirror 22, and a position in which two lights interfere and intensify on the detector 24 is observed. By this observation, it is possible to know that a reflection surface is in which depth in the fluid sample 1. Thereby, it is possible to observe an internal structure of the fluid sample 1. In addition, by imaging a result of observation, it is possible to image-capture an internal structure of the fluid sample 1.

That is, in the optical coherence tomography imaging device 20, a light in infrared region emitted from the light source 21 of the optical coherence tomography imaging unit 27 is irradiated on the fluid sample 1 while evaluating a rheology property by the rheometer 10 from a side of the flat-plate disc 12 composed of a transparent glass, which is a lower plate of the rheometer 10, via the optical coherence system included in the camera head unit 25, and an optical coherence tomography of the fluid sample 1 is performed by detecting a coherent light of the reference light and the returning light from the fluid sample 1 obtained by the optical coherence system included in the camera head unit 25 by the detector 24 of the optical coherence tomography imaging unit 27, and an optical coherence tomographic image is generated by an information processing unit 26 using, for example a personal computer (PC), from a distance image information by the coherent light obtained as an output of detection by the detector 24. As a method for generating a tomographic image by the optical coherence tomography imaging unit 27 of the optical coherence tomography imaging device 20, it is possible to use a publicly known method for generating tomographic image in an optical coherence tomography.

By using the optical coherence tomography imaging device 20 in such configuration, it is possible to observe a change in an internal structure of the fluid sample 1 in an evaluation process of a rheology property by the rheometer 10 in high speed and high resolution, which could not have been observed conventionally. That is, it is possible to observe or image-capture an internal structure of the fluid sample 1 in real time. Further, an observation of an internal structure of the fluid sample 1 in an evaluation process of a rheology property by the rheometer 10 can be recorded by a moving image.

In the internal structure analysis system 100 of the fluid sample 1, the rheometer 10 and the optical coherence tomography imaging device 20 can observe an internal structure of the fluid sample 1 according to a procedure illustrated in a flow chart of FIG. 3.

FIG. 3 is a flow chart illustrating a procedure of an internal structure observation method of a fluid sample 1 performed in the internal structure analysis system 100 of the fluid sample 1.

In a rheology property evaluation step (S1), a rheology property of a fluid sample 1 containing components different in a refractive index is evaluated by a rheometer 10.

In an optical coherence tomography imaging step (S2), an optical coherence tomographic image is generated by performing an optical coherence tomography, by irradiating a light in infrared region from outside of the rheometer 10 to the fluid sample 1 by the optical coherence tomography imaging device 20, while evaluating a rheology property in the evaluation step (S1).

In an observation or an image-capturing of an internal structure of the fluid sample 1 by the optical coherence tomography imaging device 20 in the optical coherence tomography imaging step (S2), an optical coherence tomographic image is obtained by inclining an optical axis of light in infrared region irradiating the fluid sample 1 for a predetermined angle θ within an angular range of 1 to 10 degrees with respect to a normal direction of the observation surface 1A of the fluid sample 1 in the rheometer 10 by the optical coherence tomography imaging device 20.

In an image processing step (S3), an image processing to clarify the optical coherence tomographic image generated by the optical coherence tomography imaging device 20 is performed by an image processing device 30.

The image processing device 30 is composed by using a computer such as a personal computer (PC) or a workstation, and the optical coherence tomographic image generated by the optical coherence tomography imaging device 20 is clarified by using a learning result of a speckle noise removing process by an unillustrated learning device for performing machine learning.

As such, in the optical coherence tomography imaging step (S2), the optical coherence tomographic image is obtained by inclining an optical axis of light in infrared region irradiating the fluid sample 1 for a predetermined angle within an angular range of 1 to 10 degrees with respect to the normal direction of the observation surface 1A of the fluid sample 1 by the optical coherence tomography imaging device 20, and in the image processing step (S3), an image processing to clarify the optical coherence tomographic image is performed by the image processing device 30, and it is possible to analyze an internal structure of the fluid sample 1 in an evaluation process of a rheology property by the rheometer 10.

That is, in the rheometer 10 and the optical coherence tomography imaging device 20 in the internal structure analysis system 100 of the fluid sample 1, an internal structure analysis method of the fluid sample 1 capable of analyzing an internal structure of the fluid sample 1 in an evaluation process of a rheology property by the rheometer 10 can be performed, by comprising: an evaluation step (S1) for evaluating a rheology property of the fluid sample 1 containing components different in a refractive index by a rheometer 10; an optical coherence tomography imaging step (S2) for generating an optical coherence tomographic image by performing an optical coherence tomography by irradiating a light in infrared region from outside of the rheometer 10 to the fluid sample 1 during the evaluation step (S1); and an image processing step (S3) for performing an image processing to clarify the optical coherence tomographic image generated by the optical coherence tomography imaging device 20 by an image processing device 30, and by obtaining the optical coherence tomographic image by inclining an optical axis of light in infrared region irradiating the fluid sample 1 for a predetermined angle within an angular range of 1 to 10 degrees with respect to the normal direction of the observation surface 1A of the fluid sample 1 by the optical coherence tomography imaging device 20 in the optical coherence tomography imaging step (S2), and by performing the image processing to clarify the optical coherence tomographic image by the image processing device 30 in the image processing step (S3).

An image processing to clarify an image in the image processing device 30 is performed according to a procedure illustrated in a flow chart of FIG. 4 by using, for example ImageJ which is an open-source and public-domain image processing software.

That is, by the image processing device 30, at first, converting the optical coherence tomographic image generated by the optical coherence tomography imaging device 20 to 8-bit greyscale data (step S11).

Next, generating an image for background correction by performing a Gaussian blur (20 bit) treatment to blur an image by using Gaussian function to the optical coherence tomographic image converted to 8-bit greyscale data (step S12).

Next, subtracting the image for background correction from the optical coherence tomographic image generated by the optical coherence tomography imaging device 20, i.e. original image, by image calculation (step S13), further, removing a speckle noise by performing a Gaussian blur (2 bit) treatment (step S14).

At last, adjusting a contrast and a brightness of the image in a range of minimum of 10 to maximum of 25 by a brightness and contrast processing (step S15).

Here, about respective optical coherence tomographic images obtained by image-capturing the fluid sample 1 with pH of 1.5 by the optical coherence tomography imaging device 20, when a shear speed of the rheometer 10 is respectively 10_{S}⁻¹, 150_{S}⁻¹, and 300_{S}⁻¹, a clarified image and an image before clarification by the image processing device 30 are illustrated in FIG. 5A to FIG. 5C. FIG. 5A illustrates respective optical coherence tomographic images before and after the image processing obtained when a shear speed is 10_{S}⁻¹, FIG. 5B illustrates respective optical coherence tomographic images before and after the image processing obtained when a shear speed is 150_{S}⁻¹, and FIG. 5C illustrates respective optical coherence tomographic images before and after the image processing obtained when a shear speed is 300_{S}⁻¹. In addition, about respective optical coherence tomographic images obtained by image-capturing the fluid sample 1 with pH of 9.3, a clarified image and an image before clarification by the image processing device 30 are illustrated in FIG. 6A to FIG. 6C. FIG. 6A illustrates respective optical coherence tomographic images before and after the image processing obtained when a shear speed is 10_{S}⁻¹, FIG. 6B illustrates respective optical coherence tomographic images before and after the image processing obtained when a shear speed is 150_{S}⁻¹, and FIG. 6C illustrates respective optical coherence tomographic images before and after the image processing obtained when a shear speed is 300_{S}⁻¹. In respective optical coherence tomographic images illustrated in FIG. 5A to FIG. 5C and FIG. 6A to FIG. 6C, a narrow region above a white line indicates a flat-plate disc 12, and a region below the white line indicates the fluid sample 1. The white line itself corresponds to an interface between the fluid sample 1 and the flat-plate disc 12, and it is indicated in a linear shape as a signal intensity will be large due to a large difference in a refractive index at the interface between the fluid sample 1 and the flat-plate disc 12.

In this internal structure analysis system 100, it is possible to observe a change in an internal structure of the fluid sample 1, such as a fine particle suspension, in a shear field three-dimensionally in high speed and high resolution, which could not have been observed conventionally.

In addition, not only an internal structure of the fluid sample 1, but also a correlation between a viscosity and an aggregating structure of particles can be known by measuring a viscosity by the rheometer 10.

For example, by observing an internal structure and measuring a viscosity of a particle suspension in a shear field, it is possible to optimize a manufacturing of a ceramic based on experimental facts, and not based on experience and intuition, such that it is possible to reduce a fluidity for imparting a shape while maintaining a dispersing and flocculating state of fine particles which affects an internal structure of a ceramic molded body.

That is, as illustrated in a flow chart of FIG. 7, the fluid sample 1 in this internal structure analysis system 100 may be, for example a slurry containing fine particles (raw materials) of a ceramic in a slurry preparation step (S21) of a manufacturing method of a ceramic comprising the slurry preparation step (S21), a molding step (S22), a heat treatment step (S23), an optical coherence tomography imaging step (S24), and an image analysis and processing step (S25), and it is possible to obtain raw materials of a ceramic optimized for molding a desired molded boy in the molding step (S22), by an in-situ observation and analysis of a structure of a slurry containing fine particles of a ceramic as the fluid sample 1 together with a rheology property, by the internal structure analysis system 100, in the slurry preparation step (S21).

In a manufacturing method of a ceramic illustrated in FIG. 7, optimized raw materials of a ceramic obtained by the slurry preparation step (S21) are poured into a mold to mold a desired molded body in the molding step (S22).

In the heat treatment step (S23), the molded body obtained by the molding step (S22) is heat-treated by a heat treatment furnace.

In the optical coherence tomography imaging step (S24), an optical coherence tomographic image is generated by performing an optical coherence tomography by irradiating a light in infrared region from outside of the heat treatment furnace to the molded body during a heat treatment in the heat treatment step (S23).

In the image analysis and processing step (S25), an image analysis and processing is performed to the optical coherence tomographic image generated in the optical coherence tomography imaging step (S24) to analyze whether an optically inhomogeneous state is occurring in an internal structure of the molded body in the heat treatment step (S23) or not.

That is, it is possible to achieve a clarification of internal structural change in high temperature environment in real time, by attaching the optical coherence tomography imaging device 20 for generating an optical coherence tomographic image by an internal observation method for observing an internal structure of non-transparent substance by using optical coherence (OCT (Optical Coherence Tomography)) to the heat treatment device, and it is possible to optimize a manufacturing of a ceramic based on experimental facts, and not based on experience and intuition, for example, it is possible to stop firing before generation of inhomogeneous structure and after densification of the ceramic, by firing while performing an in-situ observation of a sintering process.

In addition, in the internal structure analysis system 100 of the fluid sample 1, the rheometer 10 and the optical coherence tomography imaging device 20 function as an internal structure observation device of the fluid sample 1, comprising: the rheometer 10 for evaluating a rheology property of the fluid sample 1 containing components different in a refractive index; and the optical coherence tomography imaging unit 27 for generating an optical coherence tomographic image by performing an optical coherence tomography by irradiating a light in infrared region from outside of the rheometer 10 to the fluid sample 1 during an evaluation of a rheology property by the rheometer 10, wherein an observation of an internal structure of the fluid sample 1 in an evaluation process of a rheology property by the rheometer 10 is achieved as the optical coherence tomographic image generated by the optical coherence tomography imaging unit 27, by inclining an optical axis of light in infrared region irradiating the fluid sample 1 for a predetermined angle θ within an angular range of 1 to 10 degrees with respect to a normal direction of the observation surface 1A of the fluid sample 1 by the optical coherence tomography imaging unit 27.

In addition, in the internal structure analysis system 100 of the fluid sample 1, the rheometer 10 evaluates a rheology property of the fluid sample 1 containing components different in a refractive index, and the optical coherence tomography imaging device 20 generates an optical coherence tomographic image by performing an optical coherence tomography by irradiating a light in infrared region from outside of the rheometer 10 to the fluid sample 1 during an evaluation of a rheology property by the rheometer 10, and the rheometer 10 and the optical coherence tomography imaging device 20 function as the internal structure observation device of the fluid sample 1, wherein an observation of an internal structure of the fluid sample 1 is achieved as the optical coherence tomographic image generated by the optical coherence tomography imaging unit 27, by inclining an optical axis of light in infrared region irradiating the fluid sample 1 for a predetermined angle θ within an angular range of 1 to 10 degrees with respect to the normal direction of the observation surface 1A of the fluid sample 1 by the optical coherence tomography imaging unit 27.

Here, when generating an optical coherence tomographic image by the optical coherence tomography imaging device 20, if an optical axis of light in infrared region irradiating the fluid sample 1 from the camera head unit 25 coincides with a normal direction of the observation surface 1A of the fluid sample 1, a noise appears to the optical coherence tomographic image (OCT) by a strong reflection by a surface of the observation surface 1A, but this noise is reduced significantly by inclining.

In addition, in 0 degree, a noise appears to the optical coherence tomographic image by a strong reflection by the surface, but by inclining for a predetermined angle θ within an angular range of 1 to 10 degrees, this noise can be reduced significantly. If the inclination is more than 10 degrees, an observation of the internal structure will be limited, so it is not preferable.

Here, optical coherence tomographic images in various angles obtained by the optical coherence tomography imaging device 20, by inclining an optical axis of light in infrared region irradiating the fluid sample 1 for a predetermined angle θ within an angular range of 1 to 10 degrees with respect to a normal direction of the observation surface 1A of the fluid sample 1, are illustrated in FIG. 8A to FIG. 8F. FIG. 8A is an optical coherence tomographic image obtained when θ = 0.4 degrees, FIG. 8B is an optical coherence tomographic image obtained when θ = 1.2 degrees, FIG. 8C is an optical coherence tomographic image obtained when θ = 2.5 degrees, FIG. 8D is an optical coherence tomographic image obtained when θ = 3.1 degrees, FIG. 8E is an optical coherence tomographic image obtained when θ = 3.8 degrees, and FIG. 8F is an optical coherence tomographic image obtained when θ = 11.5 degrees. In the optical coherence tomographic image obtained when θ = 0.4 degrees illustrated in FIG. 8A, a fluid sample 1 is obscure, and in the optical coherence tomographic image obtained when θ = 11.5 degrees illustrated in FIG. 8F, a flat surface 12A of the flat-plate disc 12 is unclear, and in respective optical coherence tomographic images with respective inclination angle of θ = 1.2 degrees, θ = 2.5 degrees, θ = 3.1 degrees, and θ = 3.8 degrees, optical coherence tomographic images with excellent observation are obtained.

That is, upon achieving an observation of an internal structure of the fluid sample 1 in an evaluation process of a rheology property by the rheometer 10, by the optical coherence tomography imaging device 20 for generating an optical coherence tomographic image by performing an optical coherence tomography by irradiating a light in infrared region from outside of the rheometer 10 to the fluid sample 1 in the evaluation process of a rheology property by the rheometer 10, it is possible to generate the optical coherence tomographic image with less noise by the optical coherence tomography imaging device 20, by inclining an optical axis of light in infrared region irradiating the fluid sample 1 from the camera head unit 25 of the optical coherence tomography imaging device 20 for a predetermined angle θ within an angular range of 1 to 10 degrees with respect to a normal direction of the observation surface 1A of the fluid sample 1.

Here, by an experimental device using a rotational rheometer (MCR102, Anton Parr GmbH) composed of a flat plate made of glass and a cone made of stainless steel with angle of 1 degree and a diameter of 50.0 mm as the rheometer 10 in the internal structure analysis system 100, and arranging a SS-OST device (IVS-00-WE, Santec Corporation, a center wavelength of 1300 nm, an axial resolution of 4.4 µm (refractive index n=1), a horizontal resolution of 9 µm, a focal depth of 0.3 mm, and a scan speed of 20 kHz) as the optical coherence tomography imaging device 20, AI203 powder (Sumitomo Chemical Company, Limited, AA-3) was added to be 10 vol% with respect to a pure water, and a slurry was prepared by performing a ball mill treatment for one hour as the fluid sample 1, and an internal structure of the fluid sample 1 in an evaluation process of a rheology property by the rheometer 10 was observed, and optical coherence tomographic images as illustrated in FIG. 9A, FIG. 9B, FIG. 10A, FIG. 10B, FIG. 11A, and FIG. 11B were obtained.

A shear speed was increased from 0 to 150_{S}⁻¹ by 1_{S}⁻¹ per second, and then, decreased until O_{S}⁻¹. An image-capturing was performed at a position 18 mm from a center of a stage. About obtained optical coherence tomographic images, an image processing was performed, and a region where a reflection occurred strongly was illustrated emphatically. In addition, the slurry was solidified in situ, and optical coherence tomographic images and a thin section of the sample were observed by an optical endoscope.

From an optical microscope photograph of an in-situ solidified body, a state that fine particles flocculate in a network shape was confirmed. Numerous bright spots exist in the optical coherence tomographic image, and a state to form a network was observed. A reflection occurs at an interface between a particle and a water, so it is considered that bright spots observed by the optical coherence tomography imaging device 20 are spots where many particles exist. Thereby, it has became obvious that an aggregating structure of fine particles in the slurry can be observed in the optical coherence tomographic image.

FIG. 9A, FIG. 9B, FIG. 10A, FIG. 10B, FIG.11A, and FIG. 11B illustrate states of a slurry observed by the optical coherence tomography imaging device 20.

FIG. 9A, FIG. 10A, and FIG. 11A are respective optical coherence tomographic images obtained by image-capturing when the shear speed is 0, 16_{S}⁻¹, and 150_{S}⁻¹ respectively, and FIG. 9B, FIG. 10 B, and FIG. 11B are respective optical coherence tomographic images obtained by image-capturing after 0.033 seconds from FIG. 9A, FIG. 10A, and FIG. 11A. An upper part of the image of each drawing illustrates a flat-plate disc 12 which is a lower plate, i.e. a flat plate made of glass.

In the optical coherence tomographic image illustrated in FIG. 9A, numerous bright spots were observed in a network shape. When comparing the optical coherence tomographic image illustrated in FIG. 9A and the optical coherence tomographic image illustrated in FIG. 9B, beginning with circled bright spots, particles were not moved, so it was confirmed that a flocculating structure of fine particles exist stably.

On the other hand, when comparing the optical coherence tomographic image illustrated in FIG. 10A and the optical coherence tomographic image illustrated in FIG. 10B, in which a shear field of 16_{S}⁻¹ was applied, bright spots (circled in drawings) near a glass surface were not moved, but many particles were moved by a shear force as they were separated from the glass surface, and a state in which a particle structure in a slurry was changed was observed.

Further, when comparing the optical coherence tomographic image illustrated in FIG. 11A and the optical coherence tomographic image illustrated in FIG. 11B, in which a shear field of 150_{S}⁻¹ was applied, all particles were moved, and a state in which a particle structure in a slurry was changed significantly was observed.

However, a state in which a flocculating structure of fine particles in a network shape always existed was observed. It is considered that such change of aggregating structure of particles is caused by a transmission of a force to entire slurry due to a flocculating structure of fine particles existing in the slurry, and by a decomposition of a network composed by fine particles and a re-flocculation of fine particles when encountering other particles.

In the internal structure analysis system 100, the fluid sample 1 is loaded between a conical surface 11A of a conical disc 11 and a flat surface 12A of a flat-plate disc 12 as the rheometer 10 to comprise a conical flat-plate type rotational rheometer, but the present invention may be applied to an internal structure analysis system 200 of a slurry in a configuration as illustrated in a block diagram of FIG. 12, for example comprising a coaxial double cylindrical type rotational rheometer 210.

The internal structure analysis system 200 of a slurry comprises the rheometer 210, an optical coherence tomography imaging device 20 and an image processing device 30.

In addition, the optical coherence tomography imaging device 20 and the image processing device 30 are having similar function as which of the internal structure analysis system 100, so an identical reference number is given to an identical element, and its detailed explanation is omitted.

The rheometer 210 in the internal structure analysis system 200 is a coaxial double cylindrical type rotational rheometer for evaluating a rheology property of the fluid sample 1 by an evaluation processing unit 215, by detecting, by a stress conversion unit 214, a stress or a strain rate (shear rate) generated as a result of a rotational shearing stress working on the fluid sample 1, by rotating an inner cylinder 211 by a driving unit 213, about the fluid sample 1 loaded between an outer peripheral surface 211A of the inner cylinder 211 and an inner peripheral surface 212A of an outer cylinder 212. This rheometer 210 comprises a transparent material, for example the outer cylinder 212 made of glass, with respect to a light in infrared region emitted from the optical coherence tomography imaging device 20.

And, in this internal structure analysis system 200, a direction being orthogonal to an axial direction of a rotation axis of the rheometer 210 will be a normal direction of an observation surface 1A of the fluid sample 1, and an optical coherence tomographic image with less noise can be generated by the optical coherence tomography imaging device 20, by inclining an optical axis of light in infrared region irradiating the fluid sample 1 for a predetermined angle θ within an angular range of 1 to 10 degrees with respect to the normal direction of the observation surface 1A of the fluid sample 1.

In the internal structure analysis system 100, 200 explained in the above, with respect to the fluid sample 1, an evaluation of a rheology property of a slurry containing raw materials of a ceramic and an in-situ observation of an internal structure of a slurry are performed, but as the fluid sample 1, various fluids such as an ink, a paint, or a resin other than a slurry can be an object of analysis. In various chemical and material processing industries including a pharmaceutical, a food processing, an agricultural chemical, a paint and pigment manufacturing, a papermaking, a catalyst, a ceramic, and an ornament, the rheometer is used to determine and compare a property such as a flow characteristic of materials such as a powder, a liquid, or a semisolid such as a paste, a gel, an ointment, or its analogue, and in the present invention, an fluid sample for evaluating a rheology property by the rheometer may be an object of analysis.

That is, the fluid sample 1 is not necessary to be a Newtonian fluid (ethanol, glycerin, silicone oil or the like) in which a shear stress is proportional to a shear speed, and even it is a non-Newtonian fluid, for example a pseudoplastic fluid such as a paint, a condensed juice, a mayonnaise, and a water-soluble high polymer (methyl cellulose, carmellose sodium), a Bingham fluid such as an ointment, a zinc oxide oil, a ketchup, and a paint, and a dilatant fluid such as a high concentration starch aqueous suspension, and a milk chocolate, if it is a fluid sample containing components different in a refractive index, it can be an object of analysis by the internal structure analysis system 100, 200.

In addition, in the internal structure analysis system relating to the present invention, the rheometer 10 is not limited to a conical flat-plate type rotational rheometer and a coaxial double cylindrical type rotational rheometer, and it may be a rheometer of other type, if it is possible to perform an optical coherence tomography by irradiating a light in infrared region from outside of the rheometer to the fluid sample during an evaluation of a rheology property.

### Glossary of Drawing References

- 1: Fluid sample
- 1A: Observation surface
- 10, 210: Rheometer
- 11: Conical disc
- 12: Flat-plate disc
- 12, 213: Driving unit
- 14, 214: Stress conversion unit
- 15, 215: Evaluation processing unit
- 20: Optical coherence tomography imaging device
- 30: Image processing device
- 21: Light source
- 22: Half mirror
- 23: Reference mirror
- 24: Detector
- 25: Camera head unit
- 26: Information processing unit
- 27: Optical coherence tomography imaging unit
- 100, 200: Internal structure analysis system of slurry
- 211: Inner cylinder
- 212: Outer cylinder

## Claims

1. An internal structure observation device of a fluid sample, comprising:
a rheometer for evaluating a rheology property of the fluid sample containing components different in a refractive index; and
an optical coherence tomography imaging unit for generating an optical coherence tomographic image by performing an optical coherence tomography by irradiating a light in infrared region from outside of the rheometer to the fluid sample during an evaluation of the rheology property by the rheometer,
wherein an observation of an internal structure of the fluid sample in an evaluation process of the rheology property by the rheometer is achieved as the optical coherence tomographic image generated by the optical coherence tomography imaging unit, by inclining an optical axis of light in infrared region irradiating the fluid sample for a predetermined angle within an angular range of 1 to 10 degrees with respect to a normal direction of an observation surface of the fluid sample in the rheometer by the optical coherence tomography imaging unit.

2. The internal structure observation device of the fluid sample according to claim 1, wherein the rheometer is a conical flat-plate type rheometer, and an axial direction of a rotation axis of the rheometer is the normal direction of the observation surface of the fluid sample.

3. The internal structure observation device of the fluid sample according to claim 1, wherein the rheometer is a coaxial double cylindrical type rheometer, and a direction being orthogonal to an axial direction of a rotation axis of the rheometer is the normal direction of the observation surface of the fluid sample.

4. The internal structure observation device of the fluid sample according to any of claims 1 to 3, wherein the fluid sample is a slurry containing fine particles of a ceramic.

5. An internal structure analysis system of a fluid sample, comprising:
a rheometer for evaluating a rheology property of the fluid sample containing components different in a refractive index;
an optical coherence tomography imaging unit for generating an optical coherence tomographic image by performing an optical coherence tomography by irradiating a light in infrared region from outside of the rheometer to the fluid sample during an evaluation of the rheology property by the rheometer; and
an image processing device for performing an image processing to clarify the optical coherence tomographic image generated by the optical coherence tomography imaging unit,
wherein an analysis of an internal structure of the fluid sample in an evaluation process of the rheology property by the rheometer is achieved by obtaining the optical coherence tomographic image generated by the optical coherence tomography imaging unit, by inclining an optical axis of light in infrared region irradiating the fluid sample for a predetermined angle within an angular range of 1 to 10 degrees with respect to a normal direction of an observation surface of the fluid sample by the optical coherence tomography imaging unit, and by performing the image processing to clarify the optical coherence tomographic image by the image processing device.

6. The internal structure analysis system of the fluid sample according to claim 5, wherein the rheometer is a conical flat-plate type rheometer, and an axial direction of a rotation axis of the rheometer is the normal direction of the observation surface of the fluid sample.

7. The internal structure analysis system of the fluid sample according to claim 5, wherein the rheometer is a coaxial double cylindrical type rheometer, and a direction being orthogonal to an axial direction of a rotation axis of the rheometer is the normal direction of the observation surface of the fluid sample.

8. The internal structure analysis system of the fluid sample according to any of claims 5 to 7, wherein the fluid sample is a slurry containing fine particles of a ceramic.

9. An internal structure observation method of a fluid sample, comprising:
an evaluation step for evaluating a rheology property of the fluid sample containing components different in a refractive index by a rheometer; and
an optical coherence tomography imaging step for generating an optical coherence tomographic image by performing an optical coherence tomography by irradiating a light in infrared region from outside of the rheometer to the fluid sample during the evaluation step,
wherein in the optical coherence tomography imaging step, an observation of an internal structure of the fluid sample in an evaluation process of the rheology property by the rheometer is achieved as the optical coherence tomographic image generated by an optical coherence tomography imaging unit, by inclining an optical axis of light in infrared region irradiating the fluid sample for a predetermined angle within an angular range of 1 to 10 degrees with respect to a normal direction of an observation surface of the fluid sample in the rheometer by the optical coherence tomography imaging unit.

10. An internal structure analysis method of a fluid sample, comprising:
an evaluation step for evaluating a rheology property of the fluid sample containing components different in a refractive index by a rheometer;
an optical coherence tomography imaging step for generating an optical coherence tomographic image by performing an optical coherence tomography by irradiating a light in infrared region from outside of the rheometer to the fluid sample during the evaluation step; and
an image processing step for performing an image processing to clarify the optical coherence tomographic image generated by an optical coherence tomography imaging device by an image processing device,
wherein in the optical coherence tomography imaging step, an analysis of an internal structure of the fluid sample in an evaluation process of the rheology property by the rheometer is achieved by obtaining the optical coherence tomographic image by inclining an optical axis of light in infrared region irradiating the fluid sample for a predetermined angle within an angular range of 1 to 10 degrees with respect to a normal direction of an observation surface of the fluid sample in the rheometer by the optical coherence tomography imaging device, and by performing the image processing to clarify the optical coherence tomographic image by the image processing device.

11. A manufacturing method of a ceramic, comprising:
a slurry preparation step for obtaining raw materials of the ceramic optimized by analyzing a structure of a slurry containing fine particles of the ceramic as a fluid sample together with a rheology property by the internal structure analysis system of the fluid sample according to claim 5;
a molding step for molding the raw materials of the ceramic obtained by the slurry preparation step to a molded body; and
a heat treatment step for performing a heat treatment to the molded body obtained by the molding step by a heat treatment furnace.
